# EUROPÄISCHE PATENTANMELDUNG

(11) **EP 0 694 557 A2**
(43) Veröffentlichungstag der Anmeldung: **31.01.1996**
(21) Anmeldenummer: 95109923.3
(22) Anmeldetag: 26.06.1995
(51) Int. Cl.: C07F 17/00, C08F 10/00

(54) **Organometallverbindung**

(30) Priorität: 09.07.1994 DE 19944424227
(71) Anmelder: HOECHST AKTIENGESELLSCHAFT, D-65929 Frankfurt am Main (DE)
(72) Erfinder: Herrmann, Hans-Friedrich, Dr., D-64521 Dornheim (DE); Küber, Frank, Dr., D-61440 Oberursel (DE); Aulbach, Michael, Dr., D-65719 Hofheim (DE); Herrmann, Wolfgang Anton, Prof. Dr., D-85354 Freising (DE); Morawietz, M., Dl., D-81675 München (DE)

(57) **Zusammenfassung**

Die Erfindung betrifft eine Organometallverbindung der Formel I 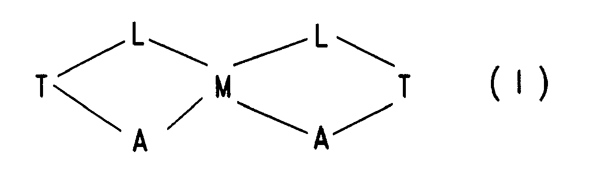 , worin M ein vierwertiges Metall, L unabhängig voneinander gleich oder verschieden ein π-Ligand, T unabhängig voneinander gleich oder verschieden eine Verbrückung und A unabhängig voneinander gleich oder verschieden ein π-Ligand oder ein anderer Elektronendonor sind.

## Beschreibung

Die vorliegende Erfindung bezieht sich auf eine Organometallverbindung, die sehr vorteilhaft als Katalysatorkomponente, z.B. für die Herstellung von Polyolefinen, eingesetzt werden kann.

Metallocenverbindungen der 4. Nebengruppe sind in Kombination mit Methylaluminoxan (MAO) aktive Katalysatoren für die Polymerisation von Olefinen. Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt.

Metallocene und Halbsandwichkomplexe sind nicht nur hinsichtlichlich der Polymerisation oder Oligomerisation von Olefinen von großem Interesse. Sie können auch als Hydrier-, Epoxidations-, Isomerisierungs-, C-C-Kupplungskataly-satoren eingesetzt werden (Chem. Rev. 1992, 92, 965-994).

Metallocene, bei denen ein Π-Ligand durch ein Heteroatom (z.B. N, O oder P) ersetzt worden ist, sind bekannt (vgl. EP 416 815). Die Herstellung der dort beschriebenen Verbindungen erweist sich als schwierig und verläuft nur mit mäßigen Ausbeuten.

Aus der Literatur ist bekannt, daß man Cp(H)CH₂CH₂CH₂N(CH₃)H mit Zirkonium- oder oder Hafniumdimethyltetramid direkt und ohne Zusatz einer Base zu Komplexen der in EP 416 815 beschriebenen Typen umsetzen kann (Organometallics, 1993, 12, 1936).

Es bestand somit die Aufgabe eine Organometallverbindung zu finden, welche die Nachteile des Standes der Technik vermeidet.

Überraschenderweise wurde gefunden, daß man durch Umsetzung von einem Metalltetraamid mit einem Ligandsystem ohne Zusatz einer Base, wie z.B. Butyllithium direkt zu einem Metallocen gelangt.

Die vorliegende Erfindung betrifft somit eine Organometallverbindung der Formel I 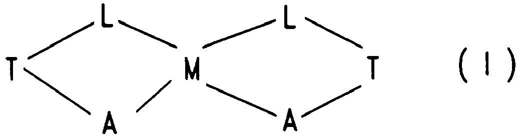 , worin M ein vierwertiges Metall, L unabhängig voneinander gleich oder verschieden ein π-Ligand, T unabhängig voneinander gleich oder verschieden eine Verbrückung und A unabhängig voneinander gleich oder verschieden ein π-Ligand oder ein anderer Elektronendonor sind.

Bevorzugt ist M gleich Titan, Zirkonium, Hafnium, Vanadium, Niob, Tantal, Scandium, Yttrium oder ein Seltenerd-metall, besonders bevorzugt Titan oder Zirkonium.
L sind bevorzugt gleich und eine substituierte oder unsubstituierte Cyclopentadienylgruppe,
T sind bevorzugt gleich und bedeuten [R¹₂B]ₙ, worin B Kohlenstoff, Silizium oder Germanium ist, die Reste R¹ gleich oder verschieden sind und Wasserstoff oder einen C₁-C₃₀-Kohlenwasserstoffrest wie C₁-C₁₀-Alkyl oder C₆-C₁₄-Aryl bedeuten, und n gleich 1, 2, 3 oder 4 ist.
A sind bevorzugt gleich und ein π-Ligand wie eine substituierte oder unsubstituierte Cyclopentadienylgruppe oder ein Elektronendonor wie O, PR², S oder NR², worin R² für Wasserstoff oder einen C₁-C₃₀-Kohlenwasserstoffrest wie C₁-C₁₀-Alkyl oder C₆-C₁₄-Aryl steht.

Beispiele für substituierte Cyclopentadienylgruppen sind: Tetramethylcyclopentadienyl, Methylcyclopentadienyl, Methyl-tert.-butylcyclopentadienyl, Tert.-butylcyclopentadienyl, Isopropylcyclopentadienyl, Dimethylcyclopentadienyl, Trimethylcyclopentadienyl, Trimethylethylcyclopentadienyl, Phenylcyclopentadienyl, Diphenylcyclopentadienyl, Indenyl, 2-Methylindenyl, 2-Ethylindenyl, 3-Methylindenyl, 3-tert.-butylindenyl, 3-Trimethylsilylindenyl, 2-Methyl-4-phenylindenyl, 2-Ethyl-4-phenylindenyl, 2-Methyl-4-naphthyl-indenyl, 2-Methyl-4-isopropyl-indenyl, Benzoindenyl, 2-Methyl-4,5-benzoindenyl, 2-Methyl-α-acenaphthindenyl, 2-Methyl-4,6-diisopropylindenyl, Fluorenyl, 4-Methylfluorenyl oder 2,7-Di-tert.-butylfluorenyl.

Beispiele für bevorzugte Verbrückungen T sind:
Dimethylsilandiyl, Methylphenylsilandiyl, Diphenylsilandiyl, Dimethylgermandiyl, 1,2-Tetramethyldisilandiyl, 1,2-Ethyliden, 1,2-Propyliden, 1,2-Butyliden, 1,3-Propyliden, 1,4-Butyliden.

Beispiele für bevorzugte Strukturelemente A sind: Cyclopentadienyl, oder substituierte Cyclopentadienylgruppen wie Indenyl, Fluorenyl, Tetramethylcyclopentadienyl, Methylcyclopentadienyl, Methyl-tert.-butylcyclopentadienyl, Tert.-butylcyclopentadienyl, Isopropylcyclopentadienyl, Dimethylcyclopentadienyl, Trimethylcyclopentadienyl, Trimethylethylcyclopentadienyl, Phenylcyclopentadienyl, Diphenylcyclopentadienyl, Indenyl, 2-Methylindenyl, 2-Ethylindenyl, 3-Methylindenyl, 3-tert.-butylindenyl, 3-Trimethylsilylindenyl, 2-Methyl-4-phenylindenyl, 2-Ethyl-4-phenylindenyl, 2-Methyl-4-naphthyl-indenyl, 2-Methyl-4-isopropyl-indenyl, Benzoindenyl, 2-Methyl-4,5-benzoindenyl, 2-Methyl-α-acenaphthindenyl, 2-Methyl-4,6-diisopropylindenyl, Fluorenyl, 4-Methylfluorenyl oder 2,7-Di-tert.-butylfluorenyl oder Elektronendonoren wie Tert.-butylamido, Cyclohexylamido, Phenylamido, 2,6-Diisopropylphenylamido, 2,6-Ditert.-butylphenylamido, Cyclododecylamido oder -O,

Beispiele für besonders bevorzugte Verbindungen der Formel I sind:
Bis{[(tert.-butylamido)dimethylsilyl)]cyclopentadienyl}zirkonium,
Bis{[(tert.-butylamido)dimethylsilyl)]cyclopentadienyl}hafnium,
Bis{[(tert.-butylamido)diphenylsilyl)]cyclopentadienyl}zirkonium,
Bis{[(tert.-butylamido)phenylmethylsilyl)]cyclopentadienyl}zirkonium,
Bis{[(tert.-butylamido)ethyliden)]cyclopentadienyl}zirkonium,
Bis{[(tert.-butylamido)isopropyliden)]cyclopentadienyl}zirkonium,
Bis{[(tert.-butylamido)dimethylsilyl)]tetramethylcyclopentadienyl}zirkonium,
Bis{[(tert.-butylamido)dimethylsilyl)]methylcyclopentadienyl}zirkonium,
Bis{[(2,6-diisopropylanilido)dimethylsilyl)]methylcyclopentadienyl}zirkonium,
Bis{[(tert.-butylamido)dimethylsilyl)]tert.-butylcyclopentadienyl}zirkonium,
Bis{[(tert.-butylamido)dimethylsilyl)]indenyl}zirkonium,
Bis{[(tert.-butylamido)dimethylsilyl)]2-methyl-indenyl}zirkonium,
Bis{[(tert.-butylamido)dimethylsilyl)]2-methyl-4-phenyl-indenyl}zirkonium,
Bis{[(tert.-butylamido)dimethylsilyl)]2-methyl-4,5-benzo-indenyl}zirkonium,
Bis{[(tert.-butylamido)dimethylsilyl)]2-methyl-4,6-diisopropyl-indenyl)zirkonium,
Bis{[(tert.-butylamido)dimethylsilyl)]fluorenyl}zirkonium,
Bis{[(phenylamido)dimethylsilyl)]cyclopentadienyl}zirkonium,
Bis{[(phenylamido)dimethylsilyl)]cyclopentadienyl}hafnium,
Bis{[(phenylamido)diphenylsilyl)]cyclopentadienyl}zirkonium,
Bis{[(phenylamido)phenylmethylsilyl)]cyclopentadienyl}zirkonium,
Bis{[(phenylamido)ethyliden)]cyclopentadienyl}zirkonium,
Bis{[(phenylamido)isopropyliden)]cyclopentadienyl}zirkonium,
Bis{[(phenylamido)dimethylsilyl)]tetramethylcyclopentadienyl}zirkonium,
Bis{[(phenylamido)dimethylsilyl)]methylcyclopentadienyl}zirkonium,
Bis{[(2,6-diisopropylanilido)dimethylsilyl)]methylcydopentadienyl}zirkonium,
Bis{[(phenylamido)dimethylsilyl)]tert.-butylcyclopentadienyl}zirkonium,
Bis{[(phenylamido)dimethylsilyl)]indenyl}zirkonium,
Bis{[(phenylamido)dimethylsilyl)]2-methyl-indenyl}zirkonium,
Bis{[(phenylamido)dimethylsilyl)]2-methyl-4-phenyl-indenyl}zirkonium,
Bis{[(phenylamido)dimethylsilyl)]2-methyl-4,5-benzo-indenyl}zirkonium,
Bis{[(phenylamido)dimethylsilyl)]2-methyl-4,6-diisopropyl-indenyl}zirkonium,
Bis{[(phenylamido)dimethylsilyl)]fluorenyl}zirkonium,
Bis{[(2,6-diisopropylanilido)dimethylsilyl)]indenyl}zirkonium,
Bis{[(2,6-diisopropylanilido)dimethylsilyl)]tert.-butylcyclopentadienyl}zirkonium,
Bis{[(2,6-di-tert.-butylanilido)dimethylsilyl)]methylcyclopentadienyl}zirkonium,
Bis{[(2,6-di-tert.-butylanilido)dimethylsilyl)]indenyl}zirkonium,
Bis(dimethylamido){[(cyclohexylanilido)dimethylsilyl)]methylcyclo-pentadienyl}zirkonium,
Bis{[(cyclohexylamido)dimethylsilyl)]indenyl}zirkonium.

Vorliegende Erfindung betrifft weiterhin ein Verfahren zur Herstellung einer Verbindung der Formel I, wobei eine Verbindung der Formel II, worin L ein π-Ligand, T eine Verbrückung und A ein π-Ligand oder ein anderer Elektronendonor ist, mit einer Verbindung der Formel III umgesetzt wird, worin M ein vierwertiges Metall ist und R³ einen C₁-C₂₀-Alkylrest, wie Methyl, Ethyl oder Isobutyl, bedeutet.

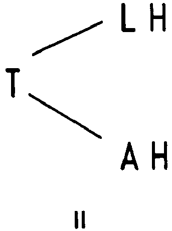

M(NR³₂)₄ III

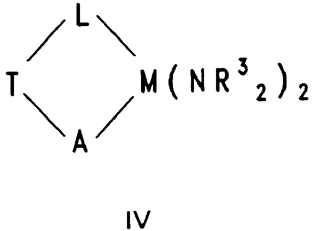

Die Reaktion wird bevorzugt in einem aprotischen Lösemittel, z.B. Toluol oder Hexan durchgeführt. Die Temperatur kann zwischen -78 und 140°C betragen, bevorzugt 0 bis 110°C. Die Verbindung der Formel II kann im Überschuß eingesetzt werden, bevorzugt werden 2-3 Äquivalente der Verbindung der Formel II bezogen auf das Metalltetramid der Formel III verwendet. Setzt man zunächst ein Metalltetraamid der Formel III mit einem Äquivalent einer Verbindung der Formel II um, so erhält man eine Verbindung der Formel IV, worin L ein π-Ligand, T eine Verbrückung, A ein π-Ligand oder ein anderer Elektronendonor, M ein vierwertiges Metall und R³ ein C₁-C₂₀-Alkylrest, wie Methyl, Ethyl oder Isobutyl bedeutet (solche Verbindungen sind z.B. in EP 416 815 beschrieben). Setzt man die Verbindung der Formel IV nach der Isolierung und Reinigung mit einem weiteren Äquivalent der ursprünglich eingesetzten Verbindung der Formel II um, so gelangt man zu Verbindungen der Formel I, in denen die beiden Strukturelemente -L-T-A- gleich sind. Setzt man die Verbindung der Formel IV mit einer von der ursprünglich eingesetzten Verbindung der Formel II verschiedenen Verbindung der Formel II um, so gelangt man zu Verbindungen der Formel I, in denen die beiden Strukturelemente -L-T-A- voneinander verschieden sind. Die Umsetzung kann auch in situ erfolgen.

Die Verfahren zur Herstellung von Verbindungen der allgemeinen Formel II sind bekannt (Chem. Ber. 1990, 123, 1649-1651). Die Verfahren zur Herstellung von Verbindungen der allgemeinen Formel III sind ebenfalls bekannt (J. Chem. Soc. 1960, 3857-3861).

Verbindungen der allgemeinen Formel I, sind in Kombination mit einem Cokatalysator geeignete Katalysatoren für die Polymerisation von Olefinen zur Herstellung von Olefinpolymeren.

Die vorliegende Erfindung betrifft somit auch ein Verfahren zur Herstellung eines Olefinpolymers durch Polymerisation oder Copolymerisation mindestens eines Olefins in Gegenwart eines Katalysators, dadurch gekennzeichnet, daß der Katalysator mindestens eine Verbindung der Formel I und mindestens einen Cokatalysator enthält.

Bevorzugt werden Olefine der Formel R^{a}-CH=CH-R^{b}, worin R^{a} und R^{b} gleich oder verschieden sind und ein Wasserstoffatom oder einen gesättigten oder ungesättigten Kohlenwasserstoffrest mit 1 bis 20 C-Atomen, insbesondere 1 bis 10 C-Atome, bedeuten, oder R^{a} und R^{b} mit den sie verbindenden Atomen einen oder mehrere Ringe bilden können, polymerisiert oder mit anderen Olefinen von oben genanntem Typ copolymerisiert werden. Beispiele für Olefine der oben genannten allgemeinen Formel sind Ethylen, Propylen, 1-Buten, Butadien, 1-Hexen, 4-Methyl-1-penten, 1-Octen, Norbornen, Norbornadien oder Styrol. Bevorzugt werden Ethylen und Propylen polymerisiert.

Die Polymerisation oder Copolymerisation wird bevorzugt bei einer Temperatur von -60 bis 200°C, besonders bevorzugt zwischen 50 und 150°C durchgeführt. Der Druck beträgt zwischen 0,5 und 100 bar, bevorzugt zwischen 5 und 64 bar. Die Polymerisation kann kontinuierlich oder diskontinuierlich, ein- oder mehrstufig, in Lösung, Suspension, Masse oder in der Gasphase durchgeführt werden. Als Molmassenregler und/oder zur Steigerung der Aktivität wird, falls erforderlich, Wasserstoff zugegeben.

Bevorzugt enthält der Katalysator eine Verbindung der Formel I und einen Cokatalysator. Es können auch Mischungen der erfindungsgemäßen Verbindungen, z.B. mit anderen Metallocenen oder klassische Ziegler-Natta-Katalysatoren eingesetzt werden. Hierdurch können Polyolefine mit breiter oder multimodaler Molmassenverteilung erhalten werden.

Als Cokatalysator wird in dem erfindungsgemäßen Verfahren bevorzugt ein Aluminoxan, welches vorzugsweise die Formel V bzw. VI aufweist, verwendet. 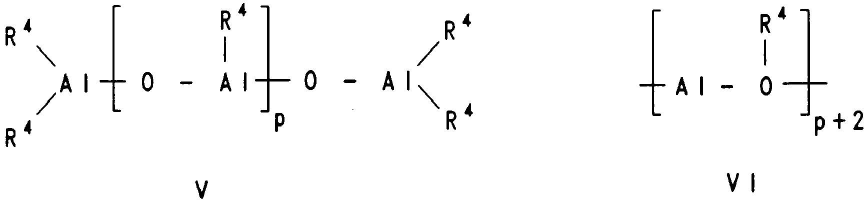 Darin können die Reste R⁴ gleich oder verschieden, und einen Kohlenwasserstoffrest mit 1 bis 20 C-Atomen, bevorzugt 1 bis 10 C-Atome oder Wasserstoff sein, und p eine ganze Zahl von 2 bis 50 bevorzugt 10 bis 35 bedeutet. Besonders bevorzugt sind die Reste R⁴ gleich und bedeuten Methyl, Isobutyl, Phenyl oder Benzyl, besonders bevorzugt Methyl. Sind die Reste R⁴ verschieden, so sind sie bevorzugt Methyl und Wasserstoff oder Methyl und Isobutyl, wobei Wasserstoff bevorzugt in einem zahlenmäßigen Anteil von 0,01 bis 40% (der Reste R⁴) enthalten sind. Die Verfahren zur Herstellung der Aluminoxane sind bekannt (EP 372 483).

Die genaue räumliche Struktur der Aluminoxane ist nicht bekannt. Beispielsweise ist denkbar, daß sich Ketten und Ringe zu größeren zwei- und dreidimensionalen Strukturen verbinden (vgl. J. Am. Chem. Soc. 1993, 115, 4971).

Es ist möglich die Metallverbindung vor dem Einsatz in der Polymerisationsreaktion mit einem Cokatalysator, z.B. einem Aluminoxan, vorzuaktivieren. Dadurch kann die Polymerisationsaktivität erhöht und die Kornmorphologie des erhaltenen Polymeren verbessert werden. Die Voraktivierung wird in Lösung vorgenommen. Bevorzugt wird die Metallverbindung in einer Lösung des Aluminoxans in einem inerten Lösemittel gelöst. Als Lösemittel eignen sich besonders aliphatische und aromatische Kohlenwasserstoffe. Besonders bevorzugt wird Toluol verwendet.

Die Konzentration des Aluminoxans in Lösung liegt in einem Bereich von ca. 1 Gew.-% bis zur Sättigung, bevorzugt zwischen 5 bis 30 Gew.-% bezogen auf die Gesamtlösemittelmenge. Das Metallocen kann in der gleichen Konzentration eingesetzt werden, vorzugsweise wird es jedoch in einer Menge von 10⁻⁴ bis 1 mol pro mol Aluminoxan eingesetzt. Die Zeit für die Voraktivierung beträgt zwischen 5 Minuten und 60 Stunden, vorzugsweise 5 bis 60 Minuten. Man arbeitet bei einer Temperatur zwischen -78 und 100°C, vorzugsweise 0 bis 70°C.

Mit Hilfe der Metallverbindung kann eine Vorpolymerisation erfolgen. Zur Vorpolymerisation wird bevorzugt das (oder eines der) in der Polymerisation eingesetzte(n) Olefin(e) verwendet.

Zur Steuerung der Kornmorphologie kann die Metallverbindung auch auf einen Träger aufgebracht werden. Geeignete Trägermaterialien sind beispielsweise Kieselgele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form.

In dem erfindungsgemäßen Polymerisationsverfahren können an Stelle oder neben eines Aluminoxans Verbindungen der Formeln R⁵ₓNH₄₋ₓBR⁶₄, R⁵ₓPH₄₋ₓBR⁶₄, R⁵₃CBR⁶₄, oder BR⁶₃, als geeignete Cokatalysatoren verwendet werden. In diesen Formeln bedeutet x eine ganze Zahl von 1 bis 4, bevorzugt 3, die Reste R⁵ sind gleich oder verschieden, bevorzugt gleich und bedeuten ein gesättigten oder ungesättigten Kohlenwasserstoffrest mit 1 bis 20, bevorzugt 1 bis 10 C-Atomen. Zwei Reste R⁵ können auch mit den sie verbindenden Atomen einen gesättigten oder ungesättigten Ring bilden. Die Reste R⁶ sind gleich oder verschieden und stehen für einen aromatischen Kohlenwasserstoffrest mit 6 bis 20, bevorzugt 6 bis 10 Kohlenstoffatome, der mit Fluor substituiert sein kann. Insbesondere steht R⁵ für Ethyl, Propyl, Butyl oder Phenyl und R⁶ für Phenyl, Pentafluorphenyl, 3,5,-Bistrifluormethylphenyl, Mesityl, Xylyl oder Tolyl (vgl. EP 277 003, EP 277 004 und EP 426 638).
Bei der Verwendung dieser Cokatalysatoren enthält der Polymerisationskatalysator das Reaktionsprodukt von der Verbindung der Formel I und einer der genannten Verbindungen. Daher wird zunächst dieses Reaktionsprodukt bevorzugt außerhalb des Polymerisationsreaktors in einem separaten Schritt hergestellt. Prinzipiell ist als Cokatalysator jede Verbindung geeignet, die aufgrund ihrer Lewis-Acidität die neutrale Metallverbindung in ein Kation überführen und dieses stabilisieren kann.
Dabei wird das Metallocen bevorzugt in einer Konzentration, bezogen auf das Übergangsmetall von 10⁻³ bis 10⁻⁸, vorzugsweise 10⁻⁴ bis 10⁻⁷ mol Übergangsmetall pro dm³ Lösemittel bzw. dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. dm³ Reaktorvolumen verwendet. Die anderen Cokatalysatoren werden in etwa equimolaren Mengen Übergangsmetallverbindung eingesetzt. Prinzipiell sind aber auch höhere Konzentrationen möglich.

Zur Entfernung von im Olefin vorhandenen Katalysatorgiften ist eine Reinigung mit einem Aluminiumalkyl, beispielsweise Trimethyl- oder Triethylaluminium vorteilhaft. Diese Reinigung kann im Polymerisationssystem selbst erfolgen oder das Olefin wird vor der Zugabe mit der Aluminiumverbindung in Kontakt gebracht und anschließend wieder getrennt.

Wenn die Polymerisation als Suspensions- oder Lösungspolymerisation durchgeführt wird, wird ein für das ZieglerNiederdruck-Verfahren gebräuchliches inertes Lösemittel verwendet. Beispielsweise arbeitet man in einem aliphatischen oder cycloaliphatischen Kohlenwasserstoff; als solche sind beispielsweise Propan, Butan, Hexan, Heptan, Isooctan, Cyclohexan, Methylcyclohexan genannt. Weterhin kann eine Benzin- bzw. hydrierte Dieselölfraktion benutzt werden. Brauchbar ist auch Toluol. Werden inerte Lösemittel verwendet, werden die Monomere flüssig oder gasförmig zudosiert. Die Dauer der Polymerisation ist beliebig lang, da das erfindungsgemäß zu verwendende Katalysatorsystem einen nur geringen zeitabhängigen Abfall der Polymerisationsaktivität zeigt.

Die nach dem beschriebenen Verfahren hergestellten Polyolefine besitzen insbesondere Bedeutung zur Herstellung von Wachsen oder Formkörpern, wie z.B. Folien, Platten oder Großhohlkörpern.

Die nachfolgenden Beispiele sollen die Erfindung näher erläutern:
Alle Glasgeräte wurden unter Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden unter Argon von einer Na/K-Legierung abdestilliert.
Toluol lösliches Methylaluminoxan wurde für die Beispiele zur Polymerisation als 10 Gew.%ige Toluol-Lösung mit einem mittleren Oligomerisationsgrad von n = 20 eingesetzt (Witco). Gemäß Aluminiumbestimmung beträgt der Gehalt 36 mg Al/ml.

Es bedeuten:
VZ = Viskositätszahl
Mw = Molmassengewichtsmittel (ermittelt durch Gelpermeationschromatographie)
Mw/Mn = Molmassendispersität

### 1. Bis{[(phenylamido)dimethylsilyl]cyclopentadienyl}zirkonium 1:

In einem 100 ml Kolben mit Rückflußkühler werden 0,379 g (1 mmol) Zr(NEt₂)₄ in 20 ml Toluol bei -78°C vorgelegt. Man tropft mit einer Spritze 0,430 g (2 mmol) Me₂Si(C₅H₅)(NHPh) in 10 ml Toluol zu. Das Reaktiongemisch wird auf Raumtemperatur erwärmt. Es wird noch 12 h zum Rückfluß erhitzt und anschließend das Lösemittel im Vakuum (0,5 mbar) entfernt. Das Produkt bleibt als gelb-brauner Feststoff zurück. Die Ausbeute beträgt 0,512 g (0,99 mmol, 99 %).
¹H-NMR (400 MHz, C₆D₆, 25°C): 0,37, 0,45 (s, 6H, Si(CH₃)₂), 5,65, 5,89, 5,95, 6,17 (4 q, 8H, H-Cp), 6,89-7,20 (m, 10H, arom. H).

### 2. Bis{[dimethylsilylbiscyclopentadienyl}zirkonium 2:

In einem 100 ml Kolben mit Rückflußkühler werden 0,379 g (1 mmol) Zr(NEt₂)₄ in 20 ml Toluol bei -50°C vorgelegt. Man tropft mit einer Spritze 0,376 g (2 mmol) Me₂Si(C₅H₅)₂ in 10 ml Toluol zu. Das Reaktiongemisch wird auf Raumtemperatur erwärmt. Es wird noch 12 h zum Rückfluß erhitzt und anschließend das Lösemittel im Vakuum (0,5 mbar) entfernt. Das Rohprodukt wird durch Sublimation gereinigt (100°C/0,001 mbar). Die Ausbeute beträgt 0,420 g (0,90 mmol, 90%).
¹H-NMR (400 MHz, C₆D₆, 25°C):0,37 (s, 12H, SiCH₃), 5,70 (t, 4H, CpH), 5,86 (t, 4H, CpH).

### 3. Bis{[(phenylamido)dimethylsilyl]cyclopentadienyl}hafnium 3:

In einem 100 ml Kolben mit Rückflußkühler werden 0,47 g (1 mmol) Hf (NEt₂)₄ in 20 ml Toluol bei -78°C vorgelegt. Man tropft mit einer Spritze 0,43 g (2 mmol) Me₂Si(C₅H₅) (NHPH) in 10 ml Toluol zu. Das Reaktionsgemisch wird auf Raumtemperatur erwärmt. Es wird noch 12 h zum Rückfluß erhitzt und anschließend das Lösemittel im Vakuum (0,5 mbar) entfernt. Das Produkt bleibt als gelber Feststoff zurück. Die Ausbeute beträgt 0,38 g (0,90 mmol; 90 %).
¹H-NMR (400 MHz, C₆D₆, 30°C): 0,36, 0,45 (s, 12H, Si(CH₃)₂), 5,59 (q, 2H, CpH), 5,90 (t, 4 H, CpH), 6,11 (q, 2H, CpH) , 6,88-7,32 (m, 10H, arom. H).

### Polymerisationsbeispiele:

### Beispiel 1

Ein trockener 1,5 dm³ Rührreaktor wird zur Entfernung von Sauerstoff mit Stickstoff gespült, mit 0,9 dm³ eines inerten Dieselöls (Sdp. 100 - 120°C) befüllt und auf 80°C temperiert. Paralell dazu werden 30 mg von Verbindung 1 in einer 10 gew.%igen Lösung von Methylaluminoxan in Toluol (12 mmol Al) gelöst und durch Rühren voraktiviert. Die Polymerisation wird durch Zudosieren der Katalysatorlösung und Aufpressen von 7 bar Ethylen gestartet. Nach einer Stunde bei 80°C wird der Reaktor entspannt, das Polymere aus der Suspension abfiltriert und 12 h im Vakuumtrockenschrank getrocknet. Es resultieren 11,9 g PE-Pulver entsprechend einer Aktivität von 26 g PE/ mmol Zr/h/bar. Die Viskositätszahl beträgt 300 cm3/g. Die Molmassenverteilung nach GPC beträgt Mw/Mn - = 2,7. Das Molmassengewichtsmittel ist Mw = 174.000 g/mol.

### Beispiel 2

Die Polymerisation aus Beispiel 1 wurde wiederholt mit dem Unterschied, daß 59 mg von Verbindung 3 und 1500 mg MAO (26 mmol Al) eingesetzt wurden. Es resultieren 5,7 g Polyethylen-Pulver entsprechend 100 g PE/g kat/h und mit einer Viskositätszahl von 210 cm3/g.

### Beispiel 3

Die Polymerisation aus Beispiel 1 wurde wiederholt mit dem Unterschied, daß 9,8 mg von Verbindung 2 und 1500 mg MAO (26 mmol Al) eingesetzt wurden. Es resultieren 19,6 g PE-Pulver (Aktivität =1990 g PE/gkat/h; VZ =135 cm³/g).

### Beispiel 4

Die Polymerisation aus Beispiel 1 wurde wiederholt mit dem Unterschied, daß 8,1 mg von Verbindung 2 und 1500 mg MAO (26 mmol Al) eingesetzt wurden. Die Polymerisationstemperatur betrug 70°C. Es resultieren 6,6 g PE-Pulver (Aktivität = 810 g PE/gkat/h; VZ = 233 cm3/g).

## Patentansprüche

1. Organometallverbindung der Formel I 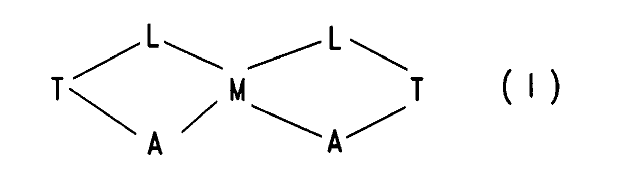 , worin M ein vierwertiges Metall, L unabhängig voneinander gleich oder verschieden ein π-Ligand, T unabhängig voneinander gleich oder verschieden eine Verbrückung und A unabhängig voneinander gleich oder verschieden ein π-Ligand oder ein anderer Elektronendonor sind.

2. Organometallverbindung gemäß Anspruch 1, worin L gleich oder verschieden eine unsubstituierte oder substituierte Cyclopentadienylgruppe sind.

3. Organometallverbindung gemäß Anspruch 1 oder 2, worin A gleich oder verschieden eine unsubstituierte oder substituierte Cyclopentadienylgruppe sind.

4. Organometallverbindung gemäß einem oder mehreren der Ansprüche 1-3, worin T gleich oder verschieden sind und [R¹₂B]ₙ bedeuten, worin B Kohlenstoff, Silizium oder Germanium ist und die Reste R¹ gleich oder verschieden sind und Wasserstoff oder einen C₁-C₃₀-Kohlenwasserstoffrest bedeuten.

5. Katalysatorkomponente, enthaltend mindestens eine Organometallverbindung gemäß einem oder mehren der Ansprüche 1-4 und mindestens einen Cokatalysator.

6. Katalysatorkomponente gemäß Anspruch 5, worin der Cokatalysator ein Aluminoxan ist.

7. Katalysatorkomponente gemäß Anspruch 5 oder 6, zusätzlich enthaltend einen Träger.

8. Verfahren zur Herstellung einer Verbindung der Formel I, 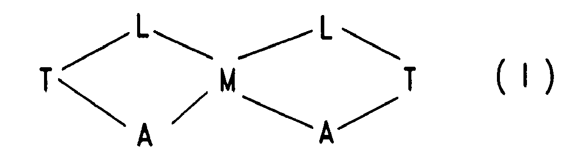 , worin M ein vierwertiges Metall, L unabhängig voneinander gleich oder verschieden ein π-Ligand, T unabhängig voneinander gleich oder verschieden eine Verbrückung und A unabhängig voneinander gleich oder verschieden ein π-Ligand oder ein anderer Elektronendonor sind,
wobei eine Verbindung der Formel II 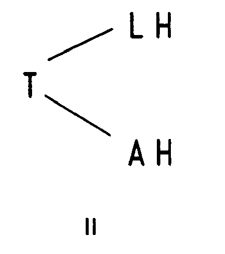 , worin L ein π-Ligand, T eine Verbrückung und A ein π-Ligand oder ein anderer Elektronendonor ist, im Überschuß mit einer Verbindung der Formel III
M(NR³₂)₄ III
, worin M ein vierwertiges Metall ist und R³ einen C₁-C₂₀-Alkylrest bedeutet, umgesetzt wird.

9. Verfahren zur Herstellung einer Verbindung der Formel IV, 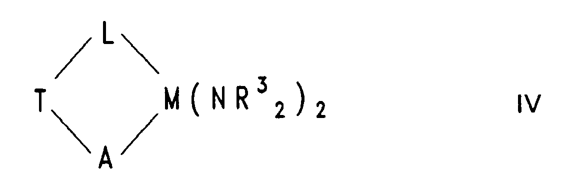 worin L ein π-Ligand, T eine Verbrückung, A ein π-Ligand oder ein anderer Elektronendonor ist, M ein vierwertiges Metall und R³ einen C₁-C₂₀-Alkylrest, bedeutet, wobei ein Äquivalent einer Verbindung der Formel II 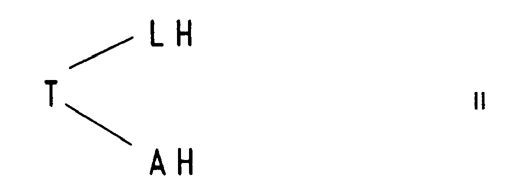 , worin L ein π-Ligand, T eine Verbrückung und A ein π-Ligand oder ein anderer Elektronendonor ist, mit einem Äquivalent einer Verbindung der Formel III,
M(NR³₂)₄ III
, worin M ein vierwertiges Metall ist und R³ einen C₁-C₂₀-Alkylrest bedeutet, umgesetzt wird.

10. Verfahren zur Herstellung eines Olefinpolymers durch Polymerisation oder Copolymerisation mindestens eines Olefins in Gegenwart eines Katalysators, **dadurch gekennzeichnet, daß** der Katalysator mindestens eine Verbindung der Formel I enthält 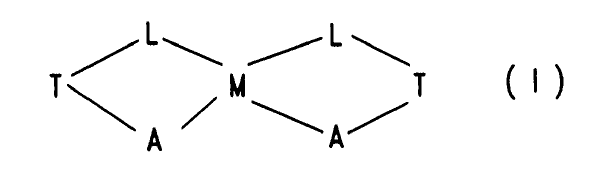 , worin M ein vierwertiges Metall, L unabhängig voneinander gleich oder verschieden ein π-Ligand, T unabhängig voneinander gleich oder verschieden eine Verbrückung, und A unabhängig voneinander gleich oder verschieden ein π-Ligand oder ein anderer Elektronendonor sind.

11. Verwendung einer Organometallverbindung der Formel I gemäß Anspruch 1 zur Olefinpolymerisation.
